# EUROPÄISCHE PATENTSCHRIFT

(11) **EP 0 655 363 B1**
(45) Veröffentlichungstag und Bekanntmachung des Hinweises auf die Patenterteilung: **16.07.1997**
(21) Anmeldenummer: 94118334.5
(22) Anmeldetag: 22.11.1994
(51) Int. Cl.: B60L 3/00, B60L 9/22

(54) **Traktionsstromrichter für ein Schienenfahrzeug**
Traction power converter for a railway vehicle
Convertisseur à traktion pour une véhicule ferrovaires

(30) Priorität: 26.11.1993 DE 4340341
(43) Veröffentlichungstag der Anmeldung: 31.05.1995
(73) Patentinhaber: ABB PATENT GmbH, D-68309 Mannheim (DE)
(72) Erfinder: Eikenberg, Michael, D-68159 Mannheim (DE)
(74) Vertreter: Rupprecht, Klaus, Dipl.-Ing.

(56) Entgegenhaltungen:
- EP-A- 0 514 580

## Beschreibung

Die Erfindung bezieht sich auf einen Traktionsstromrichter für ein Schienenfahrzeug gemäß dem Oberbegriff des Anspruchs 1.

Ein solcher Traktionsstromrichter für ein Schienenfahrzeug ist aus der EP-0 514 580 A1 bekannt.

Ein Traktionsstromrichter für ein Schienenfahrzeug mit mindestens zwei Viequadrantenstellern, mindestens zwei zwei Wechselrichtern, mindestens zwei Zwischenkreiskondensatoren und mindestens einem aus einem Saugkreiskondensator und einer Saugkreisdrossel bestehenden Saugkreis ist beispielsweise aus der BBC-Druckschrift DVK 90236 D "Elektrische Universallokomotive E 120 der DB" bekannt. Dort ist ein Traktionstransformator mit vier Sekundärwicklungen vorgesehen, wobei jede Sekundärwicklung mit einem Vierquadrantensteller verbunden ist. An jeden Vierquadrantensteller ist über einen eigenen Gleichspannungszwischenkreis ein Wechselrichter angeschlossen. Jedes Drehgestell mit zwei angetriebenen Achsen weist zwei derartige Anlagen Vierquadrantensteller/Zwischenkreis/Wechselrichter auf, wobei der Saugkreis mit beiden Gleichspannungszwischenkreisen verbunden ist.

Je nach Leistungsanforderung an das Gesamtfahrzeug muß zum Erreichen einer technisch und wirtschaftlich optimierten Lösung die Anzahl der transformatorseitigen und der motorseitigen Steller (Vierquadrantensteller, Wechselrichter) variiert werden. Bei Redudanzanforderungen an das Fahrzeug führt dies zu unabhängigen Einzelanlagen, z.B. bei 4-achsigen Fahrzeugen zu einer Anlage pro Drehgestell bei 1/2-Redundanz oder zwei Anlagen pro Drehgestell bei 3/4-Redundanz. Bei der Ausführung in unabhängigen Einzelanlagen müssen zwangsläufig auch Komponenten mit sehr hohem Zuverlässigkeitsgrad mehrfach ausgeführt werden. Kosten-, Raum- und Gewichtsvorteile durch eine Auslegung dieser Komponenten auf die Gesamtfahrzeugleistung können durch die Aufteilung in mehrere Einheiten nicht genutzt werden.

Durch die Aufteilung in gleiche unabhängige Einzelanlagen ergibt sich eine relativ grobe Leistungsstufung. Es kann jeweils nur um einen Steiler (Vierquadrantensteller oder Wechselrichter) pro Redundanzeinheit variiert werden. Eine feinere Stufung würde zu ungleichen Einzelanlagen führen und ist daher nicht sinnvoll. Durch den Zwang der induktivitätsarmen Ankopplung der Leistungshalbleiter zum Gleichspannungszwischenkreis bei GTO-Schaltungen sind Trenner oder Schütze zum Abtrennen von (beispielsweise defekten) Halbleiterphasen aufgrund ihrer Induktivität nicht möglich.

Der Erfindung liegt die Aufgabe zugrunde, einen Traktionsstromrichter für ein Schienenfahrzeug der eingangs genannten Art anzugeben, der unter Berücksichtigung von Redundanzanforderungen im Hinblick auf Gewicht, Raumbedarf und Kosten optimal ausgeführt ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß für das Gesamtfahrzeug bei 1/2-Redundanz nur ein auf die Gesamtleistung des Fahrzeugs ausgelegter Saugkreis (mit sehr hohem Zuverlässigkeitsgrad) erforderlich ist. Somit können Gewichts-, Raumbedarfs- und Kostenvorteile aufgrund der höheren Auslegungsleistung bei einem Saugkreis anstelle von zwei Saugkreisen mit je der halben Gesamtleistung genutzt werden.

Die gleichen Vorteile ergeben sich sinngemäß bei Einsatz zweier solcher Stromrichteranlagen zur Versorgung eines Schienenfahrzeuges mit hoher Leistung und 3/4-Redundanz.

Die Auslegungsvorteile durch das Auftrennen des Zwischenkreises und Zuordnen des Saugkreises zur verbleibenden Restanlage lassen sich auch bei der Übertragung auf andere Grundschaltungen nutzen.

Vorteilhafte Ausgestaltungen der Erfindung sind in den Unteransprüchen gekennzeichnet und ermöglichen relativ feine Leistungsabstufungen.

Die Erfindung wird nachstehend anhand der in der Zeichnung dargestellten Ausführungsbeispiele erläutert.

Es zeigen:
- Fig. 1: einen Traktionsstromrichter mittlerer Leistung,
- Fig. 2: einen Traktionsstromrichter größerer Leistung,
- Fig. 3: einen Traktionsstromrichter kleinerer Leistung,
- Fig. 4: einen aus zwei Stromrichteranlagen gemäß Figur 3 gebildeten Traktionsstromrichter.

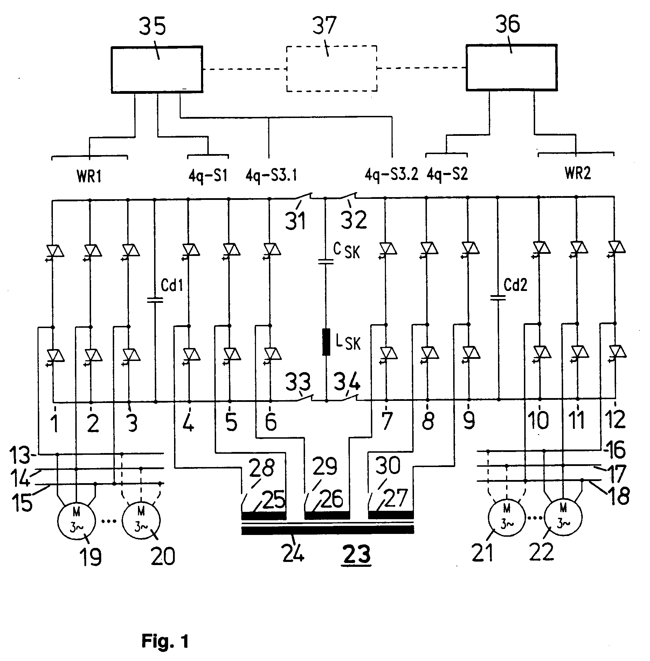

In Figur 1 ist ein Traktionsstromrichter mittlerer Leistung für ein Schienenfahrzeug dargestellt. Es sind zwölf gleichspannungsseitig mit einem Gleichspannungszwischenkreis verbundene Ventilzweigpaare 1...12 (Stromrichterphasen) zu erkennen, wobei die Ventilzweigpaare 1, 2, 3 einem ersten Wechselrichter WR1, die Ventilzweigpaare 4, 5 einem ersten Vierquadrantensteller 4q-S1, die Ventilzweigpaare 6, 7 einem dritten Vierquadrantensteller 4q-S3.1 + 4q-S3.2, die Ventilzweigpaare 8, 9 einem zweiten Vierquadrantensteller 4q-S2 und die Ventilzweigpaare 10, 11, 12 einem zweiten Wechselrichter WR2 zugeordnet sind.

Der Wechselrichter WR1 ist drehstromseitig mit Drehstromschienen 13, 14, 15 verbunden, an die ein oder mehrere Antriebsmotoren 19, 20 (beispielsweise eines ersten Drehgestells) angeschlossen sind. WR2 ist drehstromseitig mit Drehstromschienen 16, 17, 18 verbunden, an die ein oder mehrere Antriebsmotoren 21, 22 z.B. eines zweiten Drehgestells angeschlossen sind.

Zur Speisung der Vierquadrantensteller ist ein Traktionstransformator 23 mit Primärwicklung 24 und drei Sekundärwicklungen 25, 26, 27 je Stromrichteranlage vorgesehen. Im einzelnen ist der Vierquadrantensteller 4q-S1 wechselspannungsseitig über einen Schalter 28 mit Sekundärwicklung 25, der Vierquadrantensteller 4q-S3.1 + 4q-S3.2 wechselspannungsseitig über einen Schalter 29 mit Sekundärwicklung 26 und der Vierquadrantensteller 4q-S2 wechselspannungsseitig über einen Schalter 30 mit Sekundärwicklung 27 verbunden.

Die Anlage kann durch Auftrennen des Zwischenkreises mittels Schalter 31...34 in zwei Teilanlagen mit je einem Wechselrichter, einem Vierquadrantensteller und einem fest zugeordneten Teilzwischenkreis aufgeteilt werden, wobei die erste Teilanlage WR1/4q-S1 einen Zwischenkreiskondensator Cd1 und die zweite Teilanlage WR2/4q-S2 einen Zwischenkreiskondensator Cd2 aufweist. Das erste Ventilzweigpaar 4q-S3.1 des dritten Vierquadrantenstellers ist der ersten Teilanlage und das zweite Ventilzweigpaar 4q-S3.2 ist der zweiten Teilanlage zugeordnet.

Der aus einem Saugkreiskondensator CSK und einer Saugkreisdrossel LSK bestehende Saugkreis CSK/LSK kann wahlweise auf den Gesamtzwischenkreis oder auf die erste oder auf die zweite Teilanlage geschaltet werden.

Wie aus der Figur ersichtlich ist, dient eine erste Steuerelektronik 35 zur Ansteuerung der Ventile von WR1, 4q-S1 sowie 4q-S3.1 + 4q-S3.2 und eine zweite Steuerelektronik 36 zur Ansteuerung der Ventile von WR2 sowie 4q-S2. Eine übergeordnete Fahrzeugelektronik 37 beeinflußt die Steuerelektroniken 35, 36.

Der Traktionsstromrichter kann in vier unterschiedlichen Schaltkonfigurationen betrieben werden. Bei der ersten Schaltkonfiguration (maximale Leistung) sind alle Schalter 28....34 geschlossen. Es existiert ein Gesamtzwischenkreis und WR1, WR2, 4q-S1, 4q-S2 sowie 4q-S3.1 + 4q-S3.2 sind in Betrieb.

Bei der zweiten Schaltkonfiguration (verminderte Leistung) sind die Schalter 28, 30 bis 34 geschlossen, während Schalter 29 geöffnet ist. Es existiert ein Gesamtzwischenkreis und in Betrieb sind WR1, WR2, 4q-S1 und 4q-S2, während der dritte Vierquadrantensteller 4q-S3.1 + 4q-S3.2 außer Betrieb ist.

Bei der dritten Schaltkonfiguration (beispielsweise bei defektem WR2) sind die Schalter 28, 31, 33 geschlossen, während die Schalter 29, 30, 32, 34 geöffnet sind. Es existiert ein Teilzwischenkreis mit Cd1 und dem Saugkreis und in Betrieb sind WR1 und 4q-S1, während WR2, 4q-S2 sowie 4q-S3.1 + 4q-S3.2 außer Betrieb sind.

Bei der vierten Schaltkonfiguration (beispielsweise bei defektem WR1) sind die Schalter 30, 32 sowie 34 geschlossen, während die Schalter 28, 29, 31 sowie 33 geöffnet sind. Es existiert ein Teilzwischenkreis mit Cd2 und dem Saugkreis. In Betrieb sind WR2 und 4q-S2, während WR1, 4q-S1 und 4q-S3.1 + 4q-S3.2 außer Betrieb sind.

Wie aus der Figur und der vorstehenden Beschreibung hervorgeht, sind die zwei funktional zu einem Vierquadrantensteller zusammengehörigen Ventilzweigpaare 4q-S3.1, 4q-S3.2 schaltungstechnisch auf unterschiedliche Teilanlagen verteilt.

Im Bedarfsfall kann die Verbindung zwischen beiden Teilzwischenkreisen getrennt und der Saugkreis einer funktionstüchtigen Teilanlage zugeordnet werden. Ein Vierquadrantensteller und ein Wechselrichter sind in dieser Konfiguration noch betriebsfähig.

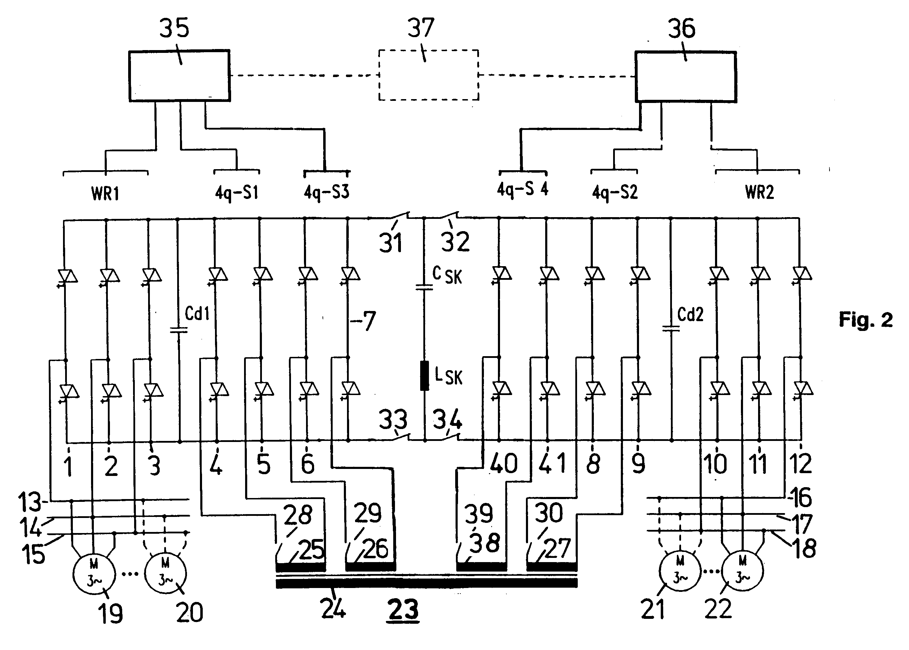

In Figur 2 ist ein Traktionsstromrichter größerer Leistung dargestellt. Zusätzlich zur Anordnung gemäß Figur 1 ist ein weiterer Vierquadrantensteller 4q-S4 vorgesehen, der wechselspannungsseitig über einen Schalter 39 mit einer weiteren Sekundärwicklung 38 des Traktionstransformators 23 verbunden ist. Die Ventilpaarzweige dieses vierten Vierquadrantenstellers 4q-S4 sind mit Ziffern 40, 41 bezeichnet. Die Steuerelektronik 36 dient zur Ansteuerung der Ventile von WR1, 4q-S1, 4q-S3 und die Steuerelektronik 37 zur Ansteuerung der Ventile von WR2, 4q-S2, 4q-S4.

Der Traktionsstromrichter kann in fünf unterschiedlichen Schaltkonfigurationen betrieben werden. Bei der ersten Schaltkonfiguration (maximale Leistung) sind alle Schalter geschlossen. Es existiert ein Gesamtzwischenkreis und WR1, WR2, 4q-S1, 4q-S2, 4q-S3 und 4q-S4 sind in Betrieb.

Bei der zweiten Schaltkonfiguration (verminderte Leistung) sind alle Schalter bis auf Schalter 39 geschlossen. Es existiert ein Gesamtzwischenkreis und in Betrieb sind WR1, WR2, 4q-S1, 4q-S2 und 4q-S3.

Bei der dritten Schaltkonfiguration (stark verminderte Leistung) sind alle Schalter bis auf Schalter 39 und 29 geschlossen. Es existiert ein Gesamtzwischenkreis und in Betrieb sind WR1, WR2, 4q-S1 und 4q-S2.

Bei der vierten Schaltkonfiguration (beispielsweise bei defektem WR2) sind die Schalter 28, 29, 31, 33 geschlossen, während die Schalter 27, 38, 32, 34 geöffnet sind. Es existiert ein Teilzwischenkreis mit Cd1, dem Saugkreis, WR1, 4q-S1 und 4q-S3. WR2, 4q-S2 und 4q-S4 sind außer Betrieb.

Bei der fünften Schaltkonfiguration (beispielsweise bei defektem WR1) sind die Schalter 30, 39, 32, 34 geschlossen, während die Schalter 28, 29, 31, 33 geöffnet sind. Es existiert ein Teilzwischenkreis mit Cd2, dem Saugkreis, WR2, 4q-S2 und 4q-S4. WR1, 4q-S1 und 4q-S3 sind außer Betrieb.

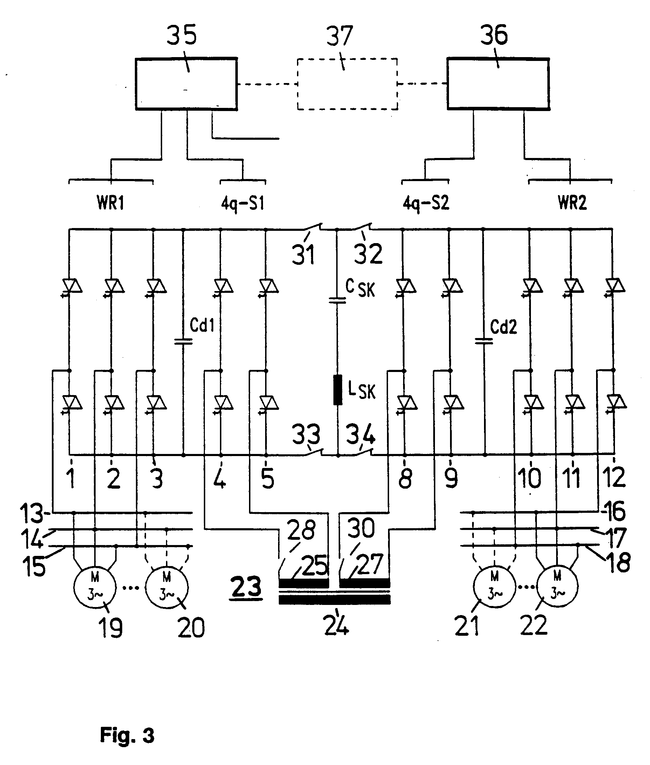

In Figur 3 ist ein Traktionsstromrichter kleinerer Leistung dargestellt. Im Vergleich zur Anordnung gemäß Figur 1 entfallen der Vierquadrantensteller 4q-S3.1+4q-S3.2, die Sekundärwicklung 26 und der Schalter 29.

Der Traktionsstromrichter kann in drei unterschiedlichen Schaltkonfigurationen betrieben werden. Bei der ersten Schaltkonfiguration sind alle Schalter geschlossen. Es existiert ein Gesamtzwischenkreis und WR1, WR2, 4q-S1, 4q-S2 sind in Betrieb.

Bei der zweiten Schaltkonfiguration (beispielsweise bei defektem WR2) sind die Schalter 28, 31, 33 geschlossen. Die Schalter 30, 32, 34 sind geöffnet. Es existiert ein Teilzwischenkreis mit Cd1, dem Saugkreis, WR1 und 4q-S1. WR2 und 4q-S2 sind außer Betrieb.

Bei der dritten Schaltkonfiguration (beispielsweise bei defektem WR1) sind die Schalter 30, 32, 34 geschlossen. Die Schalter 28, 31, 33 sind geöffnet. Es existiert ein Teilzwischenkreis mit Cd2, dem Saugkreis, WR2 und 4q-S2. WR1 und 4q-S1 sind außer Betrieb.

Wie die vorstehenden Ausführungen zeigen, ist für eine Antriebsanlage eines mehrachsigen Triebfahrzeuges mit Summenantrieb (mehrere Motoren an einem Wechselrichter) eine feine Leistungsstufung bzw. Leistungsanpassung zwischen der Ausführung mit 5-phasigen Einzelanlagen (ein Vierquadrantensteller und ein Wechselrichter) und 7-phasigen Einzelanlagen (zwei Vierquadrantensteller und ein Wechselrichter) möglich.

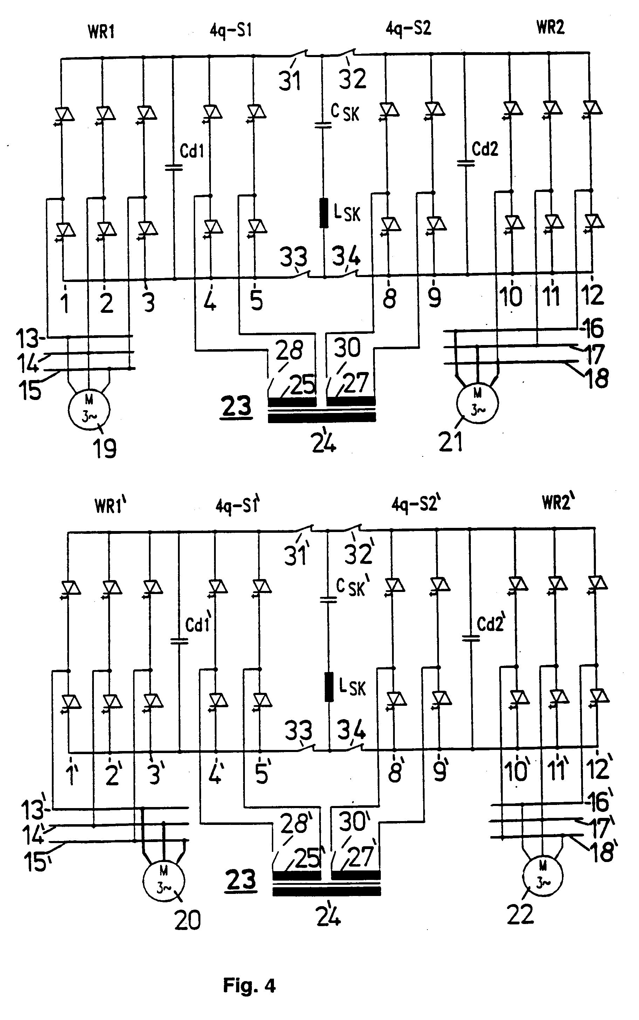

Bei Schienenfahrzeugen großer Leistung läßt sich unter Verwendung der vorstehend erläuterten Schaltungen eine 3/4-Redundanz kostengünstig durch den Einsatz zweier solcher Schaltungen realisieren. In Figur 4 ist ein derartiger, aus zwei Stromrichteranlagen gemäß Figur 2 gebildeter Traktionsstromrichter dargestellt. Dabei ist es selbstverständlich auch möglich, zwei Stromrichteranlagen gemäß Figur 1 oder Figur 2 zu einem Traktionsstromrichter zu vereinen.

Wie aus Figur 4 hervorgeht, entspricht die Bezifferung der ersten Stromrichteranlage derjenigen unter Figur 3. Insbesondere ist der Antriebsmotor 19 an WR1 und der Antriebsmotor 21 an WR2 angeschlossen. Die zweite Stromrichteranlage weist die gleichen Bauelemente wie die erste Stromrichteranlage auf, wobei die Bezifferung gemäß Figur 3 jedoch mit zusätzlichen Strichen versehen ist. Insbesondere sind der Antriebsmotor 20 an WR1' und der Antriebsmotor 22 an WR2' angeschlossen. Der dargestellte Anschluß der Antriebsmotoren 19 bis 22 ist lediglich beispielhaft und kann auch in anderer Art und Weise erfolgen. Der Traktionstransformator 23 mit Primärwicklung 24 ist beiden Stromrichteranlagen zugeordnet.

## Patentansprüche

1. Traktionsstromrichter für ein Schienenfahrzeug mit mindestens zwei Vierquadratenstellern (4q-S1, 4q-S2), mindestens zwei Wechselrichtern (WR1, WR2), mindestens zwei Zwischenkreiskondensatoren (Cd1, Cd2) und mindestens einem aus einem Saugkreiskondensator (CSK) und einer Saugkreisdrossel (LSK) bestehenden Saugkreis, wobei Schalter (28 bis 34, 39) vorgesehen sind, die ein Verbinden aller Baukomponenten (4q-S1, 4q-S2, WR1, WR2, Cd1, Cd2, CSK/LSK) zu einer Anlage mit Gesamtzwischenkreis, ein Verbinden des ersten Vierquadratenstellers (4q-S1), des ersten Wechselrichters (WR1), des ersten Zwischenkreiskondansators (Cd1) und des Saugkreises (CSK/LSK) zu einer ersten Teilanlage mit Teilzwischenkreis sowie ein Verbinden des zweiten Vierquadrantenstellers (4q-S2), des zweiten Wechselrichters (WR2), des zweiten Zwischenkreiskondensators (Cd2) und des Saugkreises (CSK/LSK) zu einer zweiten Teilanlage mit Teilzwischenkreis ermöglichen, dadurch gekennzeichnet, daß der Saugkreis (CSK, LSK) über jeweils einen Schalter (31 bis 34) mit jedem Pol der beiden Teilzwischenkreise verbindbar ist.

2. Traktionsstromrichter nach Anspruch 1, dadurch gekennzeichnet, daß ein dritter Vierquadrantensteller (4q-S3) vorgesehen ist, dessen funktional zusammengehörige Stromrichterphasen (4q-S3.1,4q-S3.2) schaltungstechnisch auf unterschiedliche Teilanlagen verteilt sind.

3. Traktionsstromrichter nach Anspruch 1, dadurch gekennzeichnet, daß sowohl der ersten als auch der zweiten Teilanlage ein weiterer zusätzlicher Vierquadrantensteller (4q-S3,4q-S4) zugeordnet ist.

4. Traktionsstromrichter nach einem der Ansprüche 1 bis 3, dadurch gekennzeichnet, daß zwei gleichartige, jeweils zwei Teilanlagen umfassende Stromrichteranlagen vorgesehen sind.

## Claims

1. Traction power converter for a railway vehicle, having at least two four-quadrant converters (4q-S1, 4q-S2), at least two invertors (WR1, WR2), at least two intermediate-circuit capacitors (Cd1, Cd2) and at least one series tuned circuit, which comprises a series tuned circuit capacitor (CSK) and a series tuned circuit inductor (LSK), switches (28 to 34, 39) being provided which enable connection of all the components (4q-S1, 4q-S2, WR1, WR2, Cd1, Cd2, CSK/LSK) first to form a system with an overall intermediate circuit, connection of the first four-quadrant converter (4q-S1), of the first invertor (WR1), of the first intermediate-circuit capacitor (Cd1) and of the series tuned circuit (CSK/LSK) to form a first partial system with a partial intermediate circuit, as well as connection of the second four-quadrant converter (4q-S2), of the second invertor (WR2), of the second intermediate-circuit capacitor (Cd2) and of the series tuned circuit (CSK/LSK) to form a second partial system with a partial intermediate circuit, characterized in that the series tuned circuit (CSK, LSK) can be connected via in each case one switch (31 to 34) to each pole of the two partial intermediate circuits.

2. Traction power converter according to Claim 1, characterized in that a third four-quadrant converter (4q-S3) is provided whose functionally associated converter phases (4q-S3.1,4q-S3.2) are distributed in terms of circuitry between different partial systems.

3. Traction power converter according to Claim 1, characterized in that both the first partial system and the second partial system are assigned a further, additional four-quadrant converter (4q-S3,4q-S4).

4. Traction power converter according to one of Claims 1 to 3, characterized in that two identical converter systems are provided, which each comprise two partial systems.

## Revendications

1. Convertisseur de courant de traction pour un véhicule sur rails, comportant au moins deux moyens de réglage à quatre quadrants (4q-S1, 4q-S2), au moins deux onduleurs (WR1, WR2), au moins deux condensateurs de circuit intermédiaire (Cd1, Cd2) et au moins un circuit d'absorption constitué par un condensateur de circuit d'absorption (CSK) et une bobine de circuit d'absorption (LSK), dans lequel sont prévus des commutateurs (28 à 34, 39) qui permettent une liaison de tous les composants constitutifs (4q-S1, 4q-S2, WR1, WR2, Cd1, Cd2, CSK/LSK) en une installation comprenant un circuit intermédiaire global, une liaison du premier moyen de réglage à quatre quadrants (4q-S1), du premier onduleur (WR1), du premier condensateur de circuit intermédiaire (Cd1) et du circuit d'absorption (CSK/LSK) en une première installation partielle comprenant un circuit intermédiaire partiel, ainsi qu'une liaison du second moyen de réglage à quatre quadrants (4q-S2), du second onduleur (WR2), du second condensateur du circuit intermédiaire (Cd2) et du circuit d'absorption (CSK/LSK) en une seconde installation partielle comportant un circuit intermédiaire partiel, caractérisé en ce que le circuit d'absorption (CSK, LSK) peut être relié chaque fois par un commutateur (31 à 34) à chaque pôle des deux circuits intermédiaires partiels.

2. Convertisseur de courant de traction suivant la revendication 1, caractérisé en ce qu'il est prévu un troisième moyen de réglage à quatre quadrants (4q-S3) dont les phases de convertisseur (4q-S3.1, 4q-S3.2) qui vont fonctionnellement ensemble sont réparties, par une technique de circuit, sur différentes installations partielles.

3. Convertisseur de courant de traction suivant la revendication 1, caractérisé en ce qu'un autre moyen de réglage à quatre quadrants supplémentaire (4q-S3, 4q-S4) est adjoint tant à la première installation partielle qu'également à la seconde.

4. Convertisseur de courant de traction suivant l'une des revendications 1 à 3, caractérisé en ce que deux semblables installations de convertisseurs comprenant chaque fois deux installations partielles sont prévues.
